(19) **Europäisches Patentamt**
**European Patent Office**
**Office européen des brevets**

(11) **EP 3 767 236 B1**

(12) **EUROPEAN PATENT SPECIFICATION**

(45) Date of publication and mention
of the grant of the patent:
**26.04.2023  Bulletin 2023/17**

(51) International Patent Classification (IPC):
**G01C 21/34** (2006.01)   **B60R 16/023** (2006.01)
**G06Q 10/04** (2023.01)   **G06Q 50/30** (2012.01)

(21) Application number: **19186340.6**

(22) Date of filing: **15.07.2019**

(52) Cooperative Patent Classification (CPC):
**G01C 21/3469; B60R 16/0236; G06Q 10/04;**
**G06Q 10/047; G06Q 50/30;** Y02T 10/84

(54) **ENERGY MAP RECONSTRUCTION BY CROWDSOURCED DATA**

ENERGIEKARTENREKONSTRUKTION DURCH CROWDSOURCING-DATEN

RECONSTRUCTION DE CARTE D'ÉNERGIE PAR DONNÉES DE CROWDSOURCING

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**

(43) Date of publication of application:
**20.01.2021  Bulletin 2021/03**

(73) Proprietor: **Bayerische Motoren Werke**
**Aktiengesellschaft**
**80809 München (DE)**

(72) Inventors:
• **Tian, Jilei**
**Chicago, IL 60605 (US)**
• **Athas, Gregory**
**Lisle, IL 60532 (US)**
• **Chin, Alvin**
**Chicago, IL 60601 (US)**

(56) References cited:
**EP-A1- 2 295 935      DE-A1-102010 041 616**
**US-A1- 2019 113 354**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

The invention relates to a method, system, medium, and program for predicting vehicle power consumption according to claims 1, 9, 10, and 11.

Due to its importance, most vehicles are able to estimate driving distance and energy consumption, as well as the metrics of miles per gallon, or kilometres per litre or kWh for combustion, electric or hybrid vehicles. The estimation is made by storing and/or averaging energy consumption from all the past or recent trips.

The invention realizes that current estimations of fuel consumptions are not precise for future predictions.

Each of documents US 2019/113354 A1, DE 10 2010 041616 A1 and EP 2 295 935 A1 discloses a method for energy consumption prediction for a type of a vehicle, a driver, and a planned trip wherein data on energy consumption values along road segments of different trips from different drivers and for different vehicles are received, wherein driver factors, vehicle type factors, and road segments factors are calculated, at least one driver factor and vehicle type factor corresponding to the driver and the vehicle are identified, road segment factors for each of one or more road segments constituting the planned trip are identified and the energy consumption prediction based on the driver factor, the vehicle type factor, the corresponding road segment factors is calculated for each of the one or more planned road segments of the planned trip.

The identified problem is solved by the method of claim 1, system of claim 9, storage medium of claim 10, and program of claim 11.

In particular, the deficiency in the prior art is solved by a computer-implemented method for energy consumption prediction for a type of a vehicle, a driver, and a planned trip with detailed context such as date, time, route, traffic, weather, etc., according to claim 1.

Advantages include improved precision on predicted energy consumption along a planned route, taking into account the driver, the type of vehicle, and road segments with context.

Advantages also include the availability of generating a map (energy consumption map) indicating road segment factors for each road segment. Such energy map may show what segments of the road are energy efficient. Such energy "heat map" could be shown in the car, and from creating this energy map, recommendations of eco-drive routes can be displayed to the driver when driving. Advantages also include that vehicle types and drivers can be compared based on vehicle type factor and driver factor.

The calculated energy consumption prediction in step e) may be displayed to the driver, stored, and/or communicated, preferably using wireless technology.

The calculation in step e) may be carried out by multiplying the driver factor and the vehicle type factor with the sum of each corresponding road segment factors multiplied by the normalized energy consumption value for each of the one or more road segments:

$$EC = fd * fv * \sum_{k=0}^{S} fns * vnec$$

where *fd* is the driver factor, *fv* is the factor for the type of vehicle, *fns* and *vnec* are the road segment factor and normalized energy consumption, respectively, for each of the road segments in the planned trip.

An energy consumption factor corresponding to weather, such as temperature, and a factor corresponding speed, such as estimated vehicle speed (or speed limit) may be included in the above equation to increase the accuracy of the estimation.

In one embodiment, the method further comprises:

f) receive or derive one or more alternative road segments to complete the planned trip;
g) identify corresponding alternative road segment factors for each of the one or more alternative road segments;
h) calculate alternative energy consumptions based on the corresponding alternative road segment factors for each of the one or more alternative road segments for the planned trip;
i) compare the energy consumption with the alternative energy consumptions to suggest a route to complete the planned trip with a lowest energy consumption.

According to the invention, step b) includes minimizing an objective function:

$$\operatorname*{argmin}_{r_u, r_v, r_l} \sum_{k=1}^{K} \left\| logC(trip_k) - log\hat{C}(trip_k) \right\|$$

where K is the total number of trips in the data set and $C(trip_k)$ is energy consumption value for trip number k in the data and

$$\log \hat{C}(trip_k) = \log r_u + \log r_v + \log \sum_{l=1}^{N_k} \left\{ f(\hat{r}_l \mid SR, WR) \cdot D(link_{k,l}) \right\}$$

where $r_u$ is the driver factor for driver u identified in the data;
where $r_v$ is the vehicle type factor for vehicle type v identified in the data;
where $f(\hat{r}_l \mid SR, WR)$ is a normalized road segment factor for road segment l, compensated by speed-rate SR, and weather rate WR; and where $D(link_{k,l})$ is the distance of road segments l, within trip k identified in the data.

In one embodiment, each road segment factor is identified differently according to the direction of driving.
In one embodiment, for each driver, vehicle type, and road segment, the objective function is minimized by using the gradient descent method and iteratively applying:

$$\begin{cases} r_u^{t+1} = r_u^t - lr_u \cdot \dfrac{\partial \{F(r_u, r_v, r_l)\}}{\partial r_u} \\[2mm] r_v^{t+1} = r_v^t - lr_v \cdot \dfrac{\partial \{F(r_u, r_v, r_l)\}}{\partial r_v} \\[2mm] r_l^{t+1} = r_l^t - lr_l \cdot \dfrac{\partial \{F(r_u, r_v, r_l)\}}{\partial r_l} \end{cases}$$

where $lr_u$, $lr_v$, $lr_l$, are learning rates for each parameter $r_u$, $r_v$, and $r_l$.
In one embodiment, energy consumption data is uploaded to a server after each completed trip;

wherein driver factor is sent to the vehicle from the server based on a user identified as driving a vehicle by the vehicle; and
wherein the vehicle type factor and the corresponding road segment factors are sent to the vehicle in response to a request to drive a planned trip.

In one embodiment, road segments are grouped based on energy consumption factors, such as elevation profile, number and shape of turns, and/or number of traffic lights, stops and yields. Advantages include reduction in sparsity of data.
According to the invention, step e) of claim 1 further includes adjusting the energy consumption for the planned trip with a factor corresponding to a current temperature and/or a current speed and/or an estimated speed during the planned trip.
The deficiency is further solved by a data processing system, according to claim 8, comprising:

a vehicle of a vehicle type driven by a driver;
a data storage, storing data on energy consumption, the data including identifications of drivers, vehicle types, and trips, to which each energy consumption relates, each trip comprising one or more road segments passed to complete the trip
wherein the system comprises means for carrying out the steps of the herein disclosed methods.

The deficiency is further solved by a computer program, according to claim 9, comprising instructions which, when the program is executed by a computer, cause the computer to carry out the steps of the herein disclosed methods.
The deficiency is further solved by a computer-readable medium, according to claim 10, comprising instructions which, when executed by a computer, cause the computer to carry out the steps of the herein disclosed methods.

The benefits and advantages of the system, medium, and program are equal or similar to the advantages of the above-mentioned methods.

In the following, embodiments of the invention are described with respect to the figures, wherein

Fig. 1    shows a system for predicting energy consumption;
Fig. 2    shows a method for predicting energy consumption;
Fig. 3    shows an energy map.

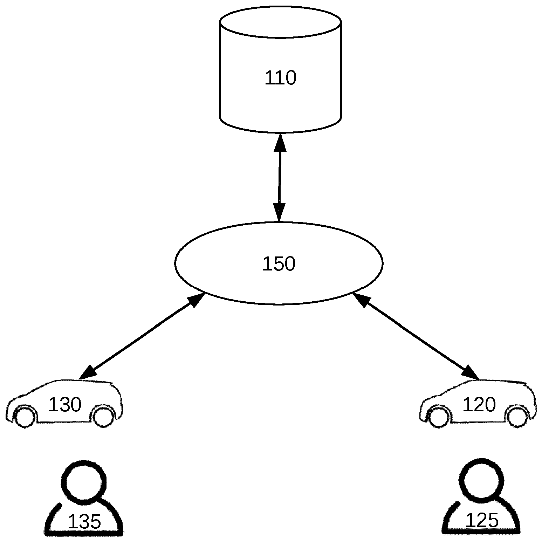

Fig. 1 shows a system including vehicles of vehicle types 120, 130 driven by drivers 125, 135. The system also includes server 110 and communication means 150. Data related to energy consumption may be updated for a plurality of vehicles to the server 110 via communication means 150. The data may include identifications on the vehicle types 120, 130 and drivers 125, 135 and the road segments driven resulting in the communicated energy consumption. The data may also contain information on the temperature and speed. The temperature and speed may be an average over the road segment.

The data may also include a direction of driving the road segment. This is in particular important if the data does not contain location of the start and end position since driving direction may have substantial impact on energy consumption.

A vehicle type may include all vehicles of the same manufacturer, model, engine, size, etc. It may also include all vehicle with the same setting, such as tire models and pressure. The server 110 may calculate driver factors, vehicle type factors, and road segment factors, for the drivers 125, 135, the vehicle types 120, 130, and road segments identified in the data.

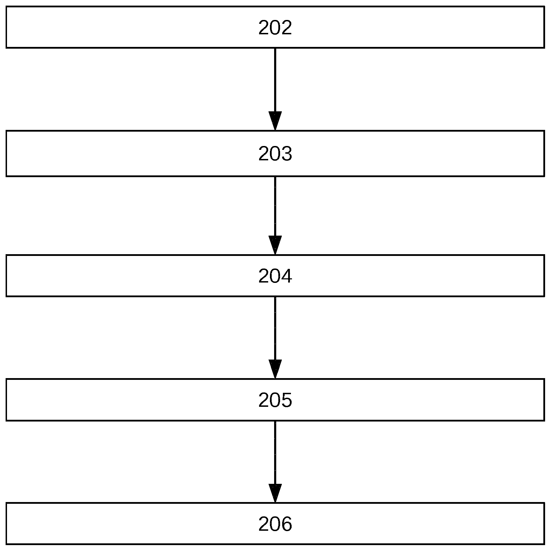

Fig. 2 shows a method for predicting energy consumption. The method may include

receive 202 data on energy consumption, the data including identifications of drivers 135, vehicle types 130, and trips A, B, to which each energy consumption relates, each trip comprising one or more road segments passed to complete the trip;
calculate 203 a driver factor, a vehicle type factor, and a road segment factor, for the drivers 135, the vehicle types 130, and road segments identified in the data;
identify 204 at least one driver factor and vehicle type factor as corresponding to an identification of the driver 120 and the vehicle type 125;
identify 205 one or more road segments to complete the planned trip and corresponding road segment factors for each of the one or more road segments;
apply 206 the driver factor, the vehicle type factor, and the corresponding road segment factors to a normalized energy consumption for each of the one or more road segments to predict the energy consumption for the planned trip.

An assumption may be that a) energy consumption depends on the link distance and energy consumption rate for a given link; b) Link-based energy consumption rate depends on the driver behavior, vehicle model, driving speed, weather and road condition; c) Let $r_u, r_v, r_l$ stand for the energy consumption rate factorized by driver, vehicle and road, respectively.

For each observation or by end of the kth trip by driver $u$, vehicle $v$ and link $l$, the following optimization problem may derive road segment, vehicle type, and drivers factors estimations.

$$\hat{C}(trip_k) = \sum_{l-1}^{N_k=\|trip_k\|} C(link_{k,l}) = \sum_{l-1}^{N_k=\|trip_k\|} \{r_u \cdot r_v \cdot r_l(speed,\ weather) \cdot D(link_{k,l})\}$$

$$\log \hat{C}(trip_k) = \log r_u + \log r_v + \log \sum_{l-1}^{N_k=\|trip_k\|} \{r_l(speed,\ weather) \cdot D(link_{k,l})\}$$

$$(r_u^*, r_v^*, r_l^*) = \underset{r_u, r_v, r_l}{\arg\min} \sum_{k=1}^{K} \|C(trip_k) - \hat{C}(trip_k)\| = \underset{r_u, r_v, r_l}{\arg\min} \sum_{k=1}^{K} \|C(trip_k) - \hat{C}(trip_k | r_u, r_v, r_l)\|$$

C is the estimation or regression function being used for energy consumption.

The parameters in the function are estimated and optimized by minimizing the objective function. $N_k$ is the total number of road segments for the $k^{th}$ trip in the training data set. C is collected/measured consumption rate (ground truth). D is distance for a given road segment. K is the total number of trips in the training set.

By applying the logarithm to $\hat{C}$, it may be possible to separate the contribution from user and vehicle as separate elements. For partial differentials, it may also simplify calculations. The logarithm expression may also suppress dynamic range of variables, leading to better estimation.

The energy consumption for each link (road segment) depends on the driving speed and weather. The normalized energy consumption rate, $\widehat{r_l}$, when driving same as the road speed limit under standard weather condition, e.g.: $T_{standard}$ = 10°C and speed-rate $SR$ and weather-rate $WR$ are derived as follows:

$$SR = \frac{Actual\ speed}{Link\ Speed\ limit}, \quad WR = actual\ temperature - T_{standard};$$

A model for the road segment factor for road segment I is defined:

$$r_l\big(speed,\ weather\big) = f(\widehat{r_l}\ |\ SR,\ WR)$$

And the optimization problem defined:

$$\log \hat{C}(trip_k) = \log r_u + \log r_v + \log \sum_{l=1}^{N_k = \|trip_k\|} \{f(\widehat{r_l}\ |\ SR,\ WR) \cdot D\big(link_{k,l}\big)\}$$

$$F(r_u, r_v, r_l) = \sum_{k=1}^{K} \big\|\log C(trip_k) - \log \hat{C}(trip_k)\big\|$$

$$\big(r_u^*, r_v^*, \hat{r_l}^*\big) = \underset{r_u, r_v, r_l}{\mathrm{argmin}}\ F(r_u, r_v, r_l) = \underset{r_u, r_v, r_l}{\mathrm{argmin}} \sum_{k=1}^{K} \big\|\log C(trip_k) - \log \hat{C}\big(trip_k | r_u, r_v, \hat{r_l}\big)\big\|$$

For example, if energy consumption rate is collected for a road segment when the vehicle drives at 80km/h at temperature of 10 °C, the energy consumption is mapped to a normalized value e.g. 50km/h at temperature of 20 °C. This reduces the sparsity of data during the training phase.

Mapping energy consumption between different speeds and different temperatures may be done by fitting a Gaussian function to data of energy consumption at different speeds and different temperatures.

The resulting energy consumption may then be mapped back during inference to the prevailing temperature and estimated driving speed (such as the speed limit on each road segment).

A very large number of parameters is to be estimated. For each user, each type of vehicle and each road segment, the parameters can be estimated using the gradient descent method and run in parallel.

$$\begin{cases} r_u^{t+1} = r_u^t - lr_u \cdot \dfrac{\partial\{F(r_u, r_v, r_l)\}}{\partial r_u} \\[2mm] r_v^{t+1} = r_v^t - lr_v \cdot \dfrac{\partial\{F(r_u, r_v, r_l)\}}{\partial r_v} \\[2mm] r_l^{t+1} = r_l^t - lr_l \cdot \dfrac{\partial\{F(r_u, r_v, r_l)\}}{\partial r_l} \end{cases}$$

Where *lr* stands for learning rate for different parameters, respectively.

Alternatively, the algorithm can further be extended to model user and road segment as the embedding vector, rather than as single parameters, to address the complexity of user behavior and road condition, e.g. contextual behavior of time of day, day of week, etc.

The algorithm framework can also be simplified, e.g. take the speed and weather as new separable parameters to be optimized, rather jointly contribution with road segment described in $f(\hat{r}_l \mid SR,\ WR)$

For road segments that never have been visited, an average energy consumption may be used in place of an estimated energy consumption to allow the function to provide a prediction.

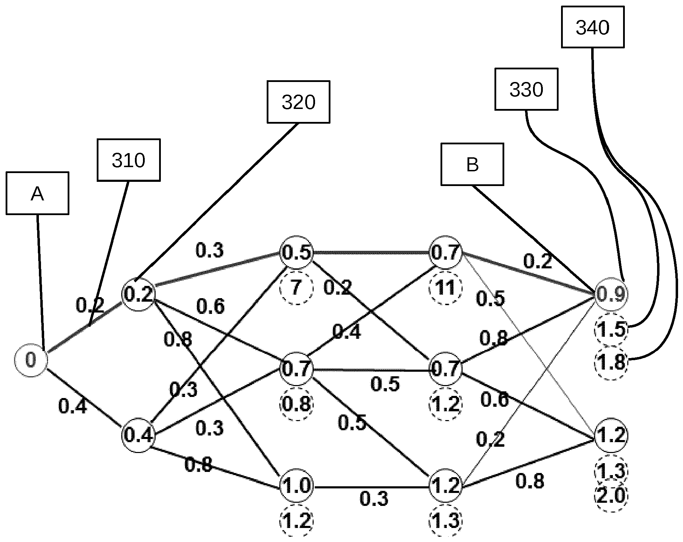

Fig. 3 shows energy map including alternative routes to reach a destination. The routes include a start location A and a destination location B and alternative routes to reach B from A. Each alternative route comprises one or more road segments 310 indicated with predicted energy consumption for driving the road segment with a current vehicle type 120 and a current driver 125. Cumulative energy consumption along alternative routes may be computed and compared. The energy consumption of the route with the lowest predicted energy consumption 330 is shown, as well energy consumptions of alternative routes with alternative energy consumptions 340.

Data on energy consumption may be telemetry collected data from vehicles in use, the data may include location tracking, map-matched route, speed, driving distance and duration, fuel and/or battery consumption, vehicle information (model, type, configuration), and driver identifier.

**Claims**

1. A computer-implemented method for energy consumption prediction for a type of a vehicle (120), a driver (125), and a planned trip with detailed context such as date, time, route, traffic, weather, etc, the method comprising following steps:

   a) receive (202) data on energy consumption values (330, 340), the data including identifications of drivers (135), types of vehicle (130), and trips (A, B), to which each energy consumption value of the energy consumption values (330, 340) relate, each trip of the trips comprising one or more identifiable road segments (310), the data further containing information on temperature and speed for said road segments;
   b) calculate (203) driver factors, vehicle type factors, and road segments factors, for the identifications of drivers (135), vehicle types (130), and road segments (310) in the data;
   c) identify (204) at least one driver factor (fd) and vehicle type factor (fv) as corresponding to the driver (120) and the vehicle (125) based on the vehicle type;
   d) identify (205) one or more planned road segments to complete the planned trip and corresponding road segment factors (fns) for each of the one or more road segments; and
   e) calculate the energy consumption prediction based on the driver factor (fd), the vehicle type factor (fv), the corresponding road segment factors (fns), and a normalized energy consumption value (vnec) for each of the one or more planned road segments;

   wherein the normalized energy consumption value is derived by driving at road speed limit under standard weather condition;
   wherein step b) includes minimizing an objective function as follows, the function being as given inside the argmin operator:

$$\underset{r_u,r_v,r_l}{\mathrm{argmin}} \sum_{k=1}^{K} \left\| logC(trip_k) - log\hat{C}(trip_k) \right\|$$

   where K is the total number of trips in the data and $C(trip_k)$ is energy consumption for trip number k in the data, and

$$\log\hat{C}(trip_k) = \log r_u + \log r_v + \log \sum_{l-1}^{N_k} \left\{ f(\hat{r}_l \mid SR,\ WR) \cdot D(link_{k,l}) \right\}$$

where $r_u$ is the driver factor for driver u identified in the data;

where $r_v$ is the vehicle type factor for vehicle type v identified in the data;

where $f\left(\widehat{r_l} \mid SR, WR\right)$ is a normalized road segment factor for road segment I identified in the data, compensated by speed-rate SR, and weather rate WR; and

where $D(link_{k,l})$ is the distance of road segment l, within trip k; and

wherein speed-rate SR and weather rate WR are derived from:

$$SR = \frac{Actual\ speed}{Link\ Speed\ limit}, \quad WR = actual\ temperature - T_{standard}.$$

wherein Link Speed limit is the road speed limit of said road segment I identified in the data, Tstandard is a temperature corresponding to standard weather condition and Actual speed and actual temperature are the speed and temperature information received at step a) for said road segment I.

2. The method of claim 1, further comprising:

f) receive or derive one or more alternative road segments to complete the planned trip;
g) identify corresponding alternative road segment factors for each of the one or more alternative road segments;
h) calculate alternative energy consumptions predictions corresponding to alternative road segment factors for each of the one or more alternative road segments for the planned trip; and
i) compare the energy consumption prediction with the alternative energy consumptions predictions to suggest a route with a lowest energy consumption.

3. The method of any of the previous claims,
wherein each road segment factor is identified according to the direction of driving.

4. The method of any of the previous claims,
wherein for each driver, vehicle type, and road segment identifications, minimizing the objective function by using the gradient descent method and iteratively applying:

$$\begin{cases} r_u^{t+1} = r_u^t - lr_u \cdot \dfrac{\partial\{F(r_u, r_v, r_l)\}}{\partial r_u} \\[2mm] r_v^{t+1} = r_v^t - lr_v \cdot \dfrac{\partial\{F(r_u, r_v, r_l)\}}{\partial r_v} \\[2mm] r_l^{t+1} = r_l^t - lr_l \cdot \dfrac{\partial\{F(r_u, r_v, r_l)\}}{\partial r_l} \end{cases}$$

where $lr_u$, $lr_v$, $lr_l$, are learning rates for each parameter $r_u$, $r_v$, and $r_l$.

5. The method of any of the previous claims,

wherein energy consumption data is uploaded to a server (110) after each completed trip;
wherein driver factor is sent to the vehicle (120) from the server (110) based on a user identified as driving the vehicle (120); and
wherein the vehicle type factor and the corresponding road segment factors are sent to the vehicle in response to a request to drive a planned trip.

6. The method of any of the previous claims,
wherein road segments are grouped based on energy consumption factors, such as elevation profile, number and shape of turns, amount of traffic, and/or number of traffic lights, stops and yields.

7. The method of any of the previous claims,
wherein step e) further includes adjusting the predicted energy consumption for the planned trip with a factor corresponding to a current temperature and/or a current speed and/or an estimated speed during the planned trip.

8. A data processing system comprising:

> a vehicle of a vehicle type (120) driven by a driver (125); communication means (150);
> a server (110) comprising
> a data storage, storing data on energy consumption, the data including identifications of drivers (135), vehicle types (130), and trips (A, B), to which each energy consumption value (330, 340) relate, each trip comprising one or more road segments (310) passed to complete the trip
> wherein the system comprises means for carrying out the steps of the method of any of the claims 1 to 7.

9. A computer program comprising instructions which, when the program is executed by a computer, cause the computer to carry out the steps of the method of any of the claims 1 to 7.

10. A computer-readable medium comprising instructions which, when executed by a computer, cause the computer to carry out the steps of the method of any of the claims 1 to 7.

**Patentansprüche**

1. Computerimplementiertes Verfahren für die Vorhersage des Energieverbrauchs eines Fahrzeugtyps (120), eines Fahrers (125) und einer geplanten Fahrt mit detailliertem Kontext wie etwa Datum, Uhrzeit, Route, Wetter usw., wobei das Verfahren die folgenden Schritte umfasst:

> a) Empfangen (202) von Daten zu Energieverbrauchswerten (330, 340), wobei die Daten Identifizierungen von Fahrern (135), Fahrzeugtypen (130) und Fahrten (A, B) beinhalten, auf die sich jeder Energieverbrauchswert der Energieverbrauchswerte (330, 340) bezieht, wobei jede Fahrt der Fahrten ein oder mehrere identifizierbare Straßensegmente (310) umfasst, wobei die Daten ferner Informationen zu einer Temperatur und Geschwindigkeit für die Straßensegmente umfassen,
> b) Berechnen (203) von Fahrerfaktoren, Fahrzeugtypfaktoren und Straßensegmentfaktoren für die Identifizierungen von Fahrern (135), Fahrzeugtypen (130) und Straßensegmenten (310) in dem Daten,
> c) Identifizieren (204) mindestens eines Fahrerfaktors (fd) und eines Fahrzeugtypfaktors (fv) als dem Fahrer (120) und dem Fahrzeug (125) entsprechend, basierend auf dem Fahrzeugtyp,
> d) Identifizieren (205) eines oder mehrerer geplanter Straßensegmente zum Vervollständigen der geplanten Fahrt, und Straßensegmentfaktoren (fns) für jedes des einen oder der mehreren Straßensegmente entsprechend und
> e) Berechnen der Vorhersage des Energieverbrauchs, basierend auf dem Fahrerfaktor (fd), dem Fahrzeugtypfaktor (fv), den entsprechenden Straßensegmentfaktoren (fns) und einem normalisierten Energieverbrauchswert (vnec) für jedes des einen oder der mehreren geplanten Straßensegmente,

> wobei der normalisierte Energieverbrauchswert durch Fahren bei Geschwindigkeitsbegrenzung der Straße unter standardmäßigen Wetterbedingungen abgeleitet wird,
> wobei Schritt b) das Minimieren einer Zielfunktion wie folgt beinhaltet, wobei die Funktion in dem Operator arg min gegeben ist:

$$\frac{argmin}{r_u r_v r_l} \sum_{k=1}^{K} \left\| log C(trip_k) - log \hat{C}(trip_k) \right\|$$

> wobei K die Gesamtanzahl der Fahrten in den Daten und ist und $C(trip_k)$ der Energieverbrauch für die Fahrt Nummer k in den Daten ist und

$$\log \hat{C}(trip_k) = \log r_u + \log r_v + \log \sum_{l-1}^{N_k} \left\{ f(\hat{r}_l | SR, WR) \cdot D(link_{k,l}) \right\}$$

wobei $r_u$ der Fahrerfaktor für den Fahrer u ist, der in den Daten identifiziert ist,
wobei $r_v$ der Fahrzeugtypfaktor für den Fahrzeugtyp v ist, der in den Daten identifiziert ist,
wobei $f(r_l|SR,WR)$ ein normalisierter Straßensegmentfaktorwert für das Straßensegment 1 ist, das in den Daten identifiziert ist, kompensiert um die Geschwindigkeitsrate SR und die Wetterrate WR, und
wobei $D(link_{k,l})$ die Strecke des Straßensegments 1 in der Fahrt k ist und
wobei die Geschwindigkeitsrate SR und die Wetterrate WR von Folgendem abgeleitet werden:

$$SR = \frac{tatsächliche\ Geschwindigkeit}{Verbindungsgeschwindigkeitgrenze}, \ WR = tatsächliche\ Temperatur -$$

$$T_{Standard}$$

wobei die Verbindungsgeschwindigkeitsgrenze die Geschwindigkeitsbegrenzung des Straßensegments 1 ist, das in den Daten identifiziert ist, $T_{standard}$ eine Temperatur ist, die standardmäßigen Wetterbedingungen entspricht und die tatsächliche Geschwindigkeit und die tatsächliche Temperatur Geschwindigkeits- und Temperaturinformationen sind, die in Schritt a) für das Straßensegment 1 empfangen werden.

2. Verfahren nach Anspruch 1, ferner Folgendes umfassend:

f) Empfangen oder Ableiten eines oder mehrerer alternativer Straßensegmente zum Vervollständigen der geplanten Fahrt,
g) Identifizieren entsprechender alternativer Straßensegmentfaktoren für jedes des einen oder der mehreren alternativen Straßensegmente,
h) Berechnen alternativer Vorhersagen des Energieverbrauchs entsprechend den alternativen Straßensegmentfaktoren für jedes des einen oder der mehreren alternativen Straßensegmente für die geplante Fahrt und
i) Vergleichen der Vorhersage des Energieverbrauchs mit den alternativen Vorhersagen des Energieverbrauchs, um eine Route mit einem niedrigsten Energieverbrauch vorzuschlagen.

3. Verfahren nach einem der vorhergehenden Ansprüche, wobei jeder Straßensegmentfaktor gemäß der Fahrtrichtung identifiziert wird.

4. Verfahren nach einem der vorhergehenden Ansprüche, wobei für jede Fahrer-, Fahrzeugtyp- und Straßensegmentidentifizierung Minimieren der Zielfunktion unter Verwendung des Verfahrens mit absteigendem Gradienten und iterativem Anwenden von:

$$\begin{cases} r_u^{t+1} = r_u^t - lr_u \cdot \dfrac{\delta\{F(r_u, r_v, r_l)\}}{\delta r_u} \\ r_v^{t+1} = r_v^t - lr_v \cdot \dfrac{\delta\{F(r_u, r_v, r_l)\}}{\delta r_v} \\ r_l^{t+1} = r_l^t - lr_l \cdot \dfrac{\delta\{F(r_u, r_v, r_l)\}}{\delta r_{ul}} \end{cases}$$

wobei $lr_u$, $lr_v$, $lr_l$ Lernraten für jeden Parameter $r_u$, $r_v$ und $r_l$ sind.

5. Verfahren nach einem der vorhergehenden Ansprüche, wobei nach jeder abgeschlossenen Fahrt Energieverbrauchsdaten in einen Server (110) hochgeladen werden,

wobei der Fahrerfaktor von dem Server (110) an das Fahrzeug (120) gesendet wird, basierend auf einem Benutzer, der als das Fahrzeug fahrend (120) identifiziert wird,
wobei der Fahrzeugtypfaktor und die entsprechenden Straßensegmentfaktoren in Reaktion auf eine Anfrage, eine geplante Fahrt zu unternehmen, an das Fahrzeug gesendet werden.

6. Verfahren nach einem der vorhergehenden Ansprüche, wobei Straßensegmente basierend auf Energieverbrauchsfaktoren gruppiert werden, wie etwa Steigungsprofil, Anzahl und Form von Kurven, Verkehrsaufkommen und/oder Anzahl von Ampeln, Stopp- und Vorfahrtsschildern.

**7.** Verfahren nach einem der vorhergehenden Ansprüche, wobei Schritt e) ferner das Justieren des vorhergesagten Energieverbrauchs für die geplante Fahrt mit einem Faktor beinhaltet, der einer gegenwärtigen Temperatur und/oder einer gegenwärtigen Geschwindigkeit und/oder einer geschätzten Geschwindigkeit während der geplanten Fahrt entspricht.

**8.** Datenverarbeitungssystem, Folgendes umfassend:

ein Fahrzeug eines Fahrzeugtyps (120), das von einem Fahrer (125) gefahren wird,
Kommunikationsmittel (150),
einen Server (110), der einen Datenspeicher umfasst, der Daten zum Energieverbrauch speichert, wobei die Daten Identifizierungen von Fahrern (135), Fahrzeugtypen (130) und Fahrten (A, B) beinhalten, auf die sich jeder Energieverbrauchswert (330, 340) bezieht, wobei jede Fahrt ein oder mehreren Straßensegmente (310) umfasst, die befahren werden, um die Fahrt zu vervollständigen, wobei das System Mittel zum Ausführen der Schritte des Verfahrens nach einem der Ansprüche 1 bis 7 umfasst.

**9.** Computerprogramm, Anweisungen umfassend, die bei Ausführung des Programms durch einen Computer den Computer veranlassen, die Schritte des Verfahrens nach einem der Ansprüche 1 bis 7 auszuführen.

**10.** Computerlesbares Medium, Anweisungen umfassend, die bei Ausführung durch einen Computer den Computer veranlassen, die Schritte des Verfahrens nach einem der Ansprüche 1 bis 7 auszuführen.

**Revendications**

**1.** Procédé, mis en œuvre par ordinateur, de prévision de la consommation d'énergie pour un type d'un véhicule (120), un conducteur (125) et un trajet planifié avec un contexte détaillé, notamment la date, l'heure, l'itinéraire, la circulation, la météo, etc., le procédé comprenant les étapes suivantes :

a) la réception (202) de données sur des valeurs de consommation d'énergie (330, 340), les données comportant des identifications de conducteurs (135), de types de véhicule (130) et de trajets (A, B) auxquelles se rapporte chaque valeur de consommation d'énergie des valeurs de consommation d'énergie (330, 340), chaque trajet des trajets comprenant un ou plusieurs segments de route (310) identifiables, les données contenant en outre des informations sur la température et la vitesse pour lesdits segments de route ;
b) le calcul (203) de facteurs de conducteur, de facteurs de type de véhicule et de facteurs de segment de route pour les identifications de conducteurs (135), de types de véhicule (130) et de segments de route (310) dans les données ;
c) l'identification (204) au moins d'un facteur de conducteur (fd) et d'un facteur de type de véhicule (fv) comme correspondant au conducteur (120) et au véhicule (125) sur la base du type de véhicule ;
d) l'identification (205) d'un ou de plusieurs segments de route planifiés pour accomplir le trajet planifié et de facteurs de segment de route (fns) correspondants pour chacun des un ou plusieurs segments de route ; et
e) le calcul de la prévision de consommation d'énergie sur la base du facteur de conducteur (fd), du facteur de type de véhicule (fv), des facteurs de segment de route (fns) correspondants et d'une valeur de consommation d'énergie normalisée (vnec) pour chacun des un ou plusieurs segments de route planifiés ;

la valeur de consommation d'énergie normalisée étant déduite d'une conduite à une limite de vitesse sur route dans des conditions météorologiques normales ;
l'étape b) comportant la minimisation d'une fonction objectif de la façon suivante, la fonction objectif étant donnée à l'intérieur de l'opérateur argmin :

$$\underset{r_u, r_v, r_l}{\mathrm{arg\,min}} \sum_{k=1}^{K} \left\| \log C(trip_k) - \log \hat{C}(trip_k) \right\|$$

où K représente le nombre total de trajets dans les données et $C(trip_k)$ représente la consommation d'énergie pour le trajet numéro k dans les données, et

$$\log \hat{C}(trip_k) = \log r_u + \log r_v + \log \sum_{l-1}^{N_k} \{ f(\hat{r_l} \mid SR,\ WR) \cdot D(link_{k,l}) \}$$

où $r_u$ représente le facteur de conducteur pour un conducteur u identifié dans les données ;

où $r_v$ représente le facteur de type de véhicule pour un type de véhicule v identifié dans les données ;

où $f(\hat{r_l} \mid SR,\ WR)$ représente un facteur de segment de route normalisé pour un segment de route l identifié dans les données, compensé en taux de vitesse, SR, et en taux météorologique, WR ; et

où D($link_{k,l}$) représente la distance du segment de route l au sein du trajet k ; et

le taux de vitesse SR et le taux météorologique WR étant déduits à partir de :

$$SR = \frac{Vitesse\ réelle}{Limite\ de\ vitesse\ sur\ liaison}, \quad WR = température\ réelle - T_{normale}.$$

où Limite de vitesse sur liaison représente la limite de vitesse sur route dudit segment de route l identifié dans les données, Tnormale représente une température correspondant à des conditions météorologiques normales et Vitesse réelle et température réelle représentent des informations de vitesse et de température reçues à l'étape a) pour ledit segment de route l.

2. Procédé selon la revendication 1, comprenant en outre :

   f) la réception ou la déduction d'un ou de plusieurs autres segments de route possibles pour accomplir le trajet planifié ;

   g) l'identification d'autres facteurs de segment de route possibles correspondants pour chacun des un ou plusieurs autres segments de route possibles ;

   h) le calcul d'autres prévisions de consommations d'énergie possibles correspondant à d'autres facteurs de segment de route possibles pour chacun des un ou plusieurs autres segments de route possibles pour le trajet planifié ; et

   i) la comparaison de la prévision de consommation d'énergie aux autres prévisions de consommations d'énergie possibles pour suggérer un itinéraire ayant la plus faible consommation d'énergie.

3. Procédé selon l'une quelconque des revendications précédentes, dans lequel chaque facteur de segment de route est identifié selon la direction de conduite.

4. Procédé selon l'une quelconque des revendications précédentes, dans lequel, pour chaque identification de conducteur, de type de véhicule et de segment de route, la minimisation de la fonction objectif par utilisation de la méthode de la descente de gradient et application itérative de :

$$\begin{cases} r_u^{t+1} = r_u^t - lr_u \cdot \dfrac{\partial \{ F(r_u, r_v, r_l) \}}{\partial r_u} \\[2mm] r_v^{t+1} = r_v^t - lr_v \cdot \dfrac{\partial \{ F(r_u, r_v, r_l) \}}{\partial r_v} \\[2mm] r_l^{t+1} = r_l^t - lr_l \cdot \dfrac{\partial \{ F(r_u, r_v, r_l) \}}{\partial r_l} \end{cases}$$

où $lr_u$, $lr_v$, $lr_l$ représentent des taux d'apprentissage pour chaque paramètre $r_u$, $r_v$ et $r_l$.

5. Procédé selon l'une quelconque des revendications précédentes,

   dans lequel des données de consommation d'énergie sont téléchargées en amont vers un serveur (110) après chaque trajet accompli ;

   dans lequel le facteur de conducteur est envoyé au véhicule (120) depuis le serveur (110) sur la base d'un utilisateur identifié comme conduisant le véhicule (120) ; et

dans lequel le facteur de type de véhicule et les facteurs de segment de route correspondants sont envoyés au véhicule en réponse à une demande de parcours d'un trajet planifié.

6. Procédé selon l'une quelconque des revendications précédentes,
dans lequel des segments de route sont regroupés sur la base de facteurs de consommation d'énergie, tels qu'un profil d'élévation, un nombre et une forme de virages, un volume de circulation et/ou un nombre de feux de circulation, de panneaux stop et de panneaux cédez le passage.

7. Procédé selon l'une quelconque des revendications précédentes,
dans lequel l'étape e) comporte en outre l'ajustement de la consommation d'énergie prévue pour le trajet planifié à l'aide d'un facteur correspondant à une température actuelle et/ou une vitesse actuelle et/ou une vitesse estimée durant le trajet planifié.

8. Système de traitement de données, comprenant :

un véhicule d'un type de véhicule (120) conduit par un conducteur (125) ;
des moyens de communication (150) ;
un serveur (110) comprenant une unité de stockage de données, stockant des données sur la consommation d'énergie, les données comportant des identifications de conducteurs (135), de types de véhicule (130) et de trajets (A, B), auxquelles se rapporte chaque valeur de consommation d'énergie (330, 340), chaque trajet comprenant un ou plusieurs segments de route (310) empruntés pour accomplir le trajet,
le système comprenant des moyens de réalisation des étapes du procédé selon l'une quelconque des revendications 1 à 7.

9. Programme d'ordinateur comprenant des instructions qui, lorsque le programme est exécuté par un ordinateur, amènent l'ordinateur à réaliser les étapes du procédé selon l'une quelconque des revendications 1 à 7.

10. Support lisible par ordinateur comprenant des instructions qui, lorsqu'elles sont exécutées par un ordinateur, amènent l'ordinateur à réaliser les étapes du procédé selon l'une quelconque des revendications 1 à 7.

**EP 3 767 236 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2019113354 A1
- DE 102010041616 A1
- EP 2295935 A1